Europäisches Patentamt

European Patent Office

Office européen des brevets

(11) Veröffentlichungsnummer: **0 163 949**

**B1**

(12) **EUROPÄISCHE PATENTSCHRIFT**

(45) Veröffentlichungstag der Patentschrift:
04.10.89

(21) Anmeldenummer: 85105392.6

(22) Anmeldetag: 03.05.85

(51) Int. Cl.⁴: **F 16 F 13/00,** B 60 K 5/12,
F 16 F 7/10

(54) Lager, insbesondere zur Lagerung einer Brennkraftmaschine in einem Kraftfahrzeug.

(30) Priorität: 07.06.84 DE 3421137

(43) Veröffentlichungstag der Anmeldung:
11.12.85 Patentblatt 85/50

(45) Bekanntmachung des Hinweises auf die Patenterteilung:
04.10.89 Patentblatt 89/40

(84) Benannte Vertragsstaaten:
DE FR GB IT SE

(56) Entgegenhaltungen:
EP-A-0 039 823
EP-A-0 110 197
DE-A-3 125 040
DE-C-2 947 018
US-A-4 415 148

(73) Patentinhaber: AUDI AG, Auto- Union- Strasse 1
Postfach 220, D-8070 Ingolstadt (DE)

(72) Erfinder: Hollerweger, Heinz, Effnerstrasse 20,
D-8070 Ingolstadt (DE)
Erfinder: van den Boom, Johannes, Marie- Luise-
Fleisser- Strasse 16, D-8073 Kösching (DE)
Erfinder: Kuipers, Geert, Am Kirchenweg 1a,
D-8070 Ingolstadt (DE)

(74) Vertreter: Le Vrang, Klaus, AUDI AG Postfach 220
Patentabteilung I/EQP, D-8070 Ingolstadt (DE)

**Beschreibung**

Die Erfindung bezieht sich auf ein Lager, insbesondere zur Lagerung einer Brennkraftmaschine in einem Kraftfahrzeug gemäß Oberbegriff des Anspruchs 1.

Ein gattungsgemäßes Motorlager ist aus der DE-PS-2 947 018 bekannt, bei der die Übertragungsfunktion des Systems zuerst, ausgehend von einer statischen Steifigkeit, bis zur Eigenfrequenz, ansteigt, um dann auf einen Tilgungspunkt abzufallen und anschließend sich einem asymptotischen Wert der Endsteifigkeit zu nähern, der unter dem Wert der statischen Steifigkeit liegt. Die Ausführung dieses Systems beruht auf dem Prinzip, den Tilgungspunkt mit der Frequenz der ausgeprägten Motorharmonischen, also proportional zur Drehzahl, zu verschieben. Damit ist eine Steuerung der Lagereigenschaften möglich. Fig. 8 dieser Druckschrift zeigt eine elastisch angekoppelte Tilgermasse an ein durch die Schwingungen beeinflußtes Lagerteil, wobei der Grad der Ankoppelung der Tilgermasse durch den einstellbaren Druck eines Fluidvolumens beeinflußt werden kann.

Aufgabe der Erfindung ist es, ein Motorlager zu schaffen, bei dem das Übertragungsverhalten gegenüber den bekannten Lagern verbessert wird.

Diese Aufgabe wird gelöst durch eine wahlweise An- und vollständige Abkoppelung einer Tilgermasse an ein durch die Schwingen bewegtes Lagerteil.

In einer Ausführungsform ist ein Lager mit zwei Kammern vorgesehen, die durch eine Trennfläche voneinander getrennt sind. Die Tilgermasse läßt sich an diese Trennfläche ankoppeln bzw. abkoppeln.

Zur Erzielung einer guten Tilgerwirkung ist die Trennfläche bei Volumenänderungen von mindestens einer Kammer verschiebbar oder formveränderbar. Dadurch wird die Einleitung der Schwingungen auf den Lagerkern über die Volumenänderung der Kammer als Bewegung auf die Tilgermasse übertragen.

Sinnvollerweise ist die Tilgermasse mit der Trennfläche nicht starr verbunden, sondern läßt sich mit einer veränderbaren Federkonstanten an den Verbindungspunkt an der Trennfläche ankoppeln. Die Federeigenschaften der Ankoppelung können von 0 (Tilgermasse ist von der Trennwand vollständig entkoppelt) bis unendlich (Tilgermasse ist starr mit der Trennfläche verbunden) eingestellt werden.

Eine derartige Einstellvorrichtung kann beispielsweise ein Fluidpolster besitzen, das die Trennfläche mit der Tilgermasse verbindet. Dieses Fluidpolster kann ein Gaspolster sein, so daß durch die durch die Federkomponente des Gaspolsters gebildete Feder die Tilgermasse mit der Trennfläche verbunden ist. Die Federungseigenschaften sind somit ohne Schwierigkeiten über den Gasdruck in dem Polster einstellbar.

Eine Möglichkeit, dieses Gaspolster zu verwirklichen, ist ein ringförmiger Gummischlauch, der auf seiner einen Seite an der Tilgermasse anliegt und auf der anderen Seite mit einem Flansch verbunden ist, der seinerseits an die Trennfläche angekoppelt ist. Der gasgefüllte Gummischlauch schließt durch seine ringförmige Anordnung seinerseits wieder ein Gasvolumen ein, das nach oben von dem Flansch, nach unten von der Tilgermasse und seitlich von dem Gummischlauch begrenzt wird. Durch geeignete Ventile, die sowohl den Gummischlauch in seinem Innern als auch das von Tilgermasse, Flansch und Gummischlauch eingeschlossene Volumen zugänglich machen, sind Volumina und dadurch die Gasdrücke in den jeweiligen Volumina einstellbar und somit die Federkonstante der Ankoppelung der Tilgermasse an den Flansch einstellbar.

Eine weitere Möglichkeit der Beeinflussung der Starrheit der Ankoppelung der Tilgermasse bei dieser Ausführungsform kann dadurch vorgesehen sein, daß die Tilgermasse an einem mit dem Widerlager verbundenen Bauteil, also karosserieseitig, über ein Gaspolster angekoppelt ist, das seinerseits wieder durch ein Ventil starr oder weich schaltbar ist.

Die somit vorgesehenen Ventile werden bevorzugterweise durch Motorparameter, beispielsweise die Drehzahl, angesteuert, so daß durch die verschiedenen Kombinationen von Öffnungen und Schließungen der einzelnen Ventile die Eigenschaften des Motorlagers in weitem Bereiche veränderbar sind. Durch gezielte Auswahl der Parameter zur Ansteuerung der einzelnen Ventile lassen sich somit Übertragungseigenschaften des Motorlagers erzielen, die in jedem Drehzahlbereich der statischen Steifigkeit des Motorlagers überlegen sind.

Um bereits in oder unterhalb der Leerlaufdrehzahlen ein weiches Motorlager zu erhalten, das auch bei großen Amplituden keine Stöße überträgt, läßt sich die Übertragungsfunktion des Motorlagers sehr weich schalten, indem entweder die Kammer, auf die der Lagerkern direkt einwirkt, sehr weich wird, oder indem die Drosselwirkung des Fluidübertritts von der einen Kammer in die andere aufgehoben wird. Im ersten Fall ist es sinnvoll, eine weiche Membran in einer Wand der ersten Kammer vorzusehen, die ein dahinterliegendes Fluidpolster, beispielsweise ein Gaspolster besitzt, das wahlweise hart oder weich geschaltet werden kann. Dadurch wird die Nachgiebigkeit der Membran beeinflußt.

Im anderen Fall ist ein Ventil zwischen den beiden Kammern vorgesehen, das bei oder unterhalb der Leerlaufdrehzahl öffnet, so daß ungehindert Fluid von der ersten Kammer in die zweite Kammer strömen kann. Da die zweite Kammer eine formnachgiebige Wand besitzt, werden so harte Stöße mit großen Amplituden insbesondere bei niedrigen Frequenzen abgefangen.

In weiterer Ausbildung ist es denkbar, die verschiedenen Ventile dieser Ausführungsform nicht durch Motorparameter zu steuern, sondern dem Motorblock einen Sensor zuzuordnen, der die mechanischen Erschütterungen ermittelt und in eine Regelschleife den Gasdruck in den einzelnen abgeschlossenen Volumina beeinflußt.

Eine weitere Ausführungsform sieht vor, daß die dem Lagerkern zugeordnete Kammer an eine dritte Kammer über eine Fluidverbindung anschlossen ist, wobei eine elastisch bewegbare Wand der dritten Kammer die Tilgermasse trägt. In dieser Ausführungsform läßt sich die Tilgermasse an der bewegbaren Wand über einen Elektromagneten befestigen. Dazu kann beispielsweise die bewegbare Wand einen Fortsatz aus ferritischem Material aufweisen, um den eine Spule gebildet wird, die mit der Tilgermasse verbunden ist. Bei Stromfluß durch die Spule wird die Spule aufgrund der magnetischen Ankoppelung mit der bewegbaren Wand bewegt, so daß die Tilgermasse an die bewegbare Wand angekoppelt ist. Der Grad der Ankoppelung läßt sich durch den Stromdurchfluß der Spule einstellen, außerdem läßt sich hier eine verhältnismäßig leicht schaltbare An- und Abkoppelung erzielen, da der Stromdurchfluß unproblematisch zu schalten ist.

Eine weitere Ausführungsform sieht vor, daß ein Flansch mit der Trennfläche verbunden ist, der eine Wandung für ein Gasvolumen bildet, das als weitere Wandung die elastisch aufgehängte Tilgermasse aufweist. Der Bewegungsspielraum der Tilgermasse läßt sich dabei wieder dadurch einstellen, daß die Tilgermasse auf zwei gegenüberliegenden Seiten mit einem Gasvolumen beaufschlagt wird, das zumindest auf einer Seite in seinem Gasdruck einstellbar ist.

Im folgenden wird die Erfindung anhand mehrerer Ausführungsformen unter Zuhilfenahme der Figuren im einzelnen erläutert. Es zeigen:

Fig. 1    eine Ausführungsform eines Lagers nach dem Stand der Technik;
Fig. 2    die schematische Darstellung des Übertragungsverhaltens des Lagers nach Fig. 1;
Fig. 3    eine Ausführungsform eines Zweikammerlagers;
Fig. 4    das Übertragungsverhalten des Lagers nach Fig. 3;
Fig. 5 eine erste Ausführungsform eines erfindungsgemäßen Lagers;
Fig. 6    die Übertragungsfunktion des Lagers nach Fig. 5, abhängig von den jeweiligen Einstellungen;
Fig. 7    eine zweite Ausführungsform eines erfindungsgemäßen Lagers;
Fig. 8    die Übertragungsfunktion des Lagers nach Fig. 7;
Fig. 9    eine weitere Ausführungsform eines erfindungsgemäßen Lagers;

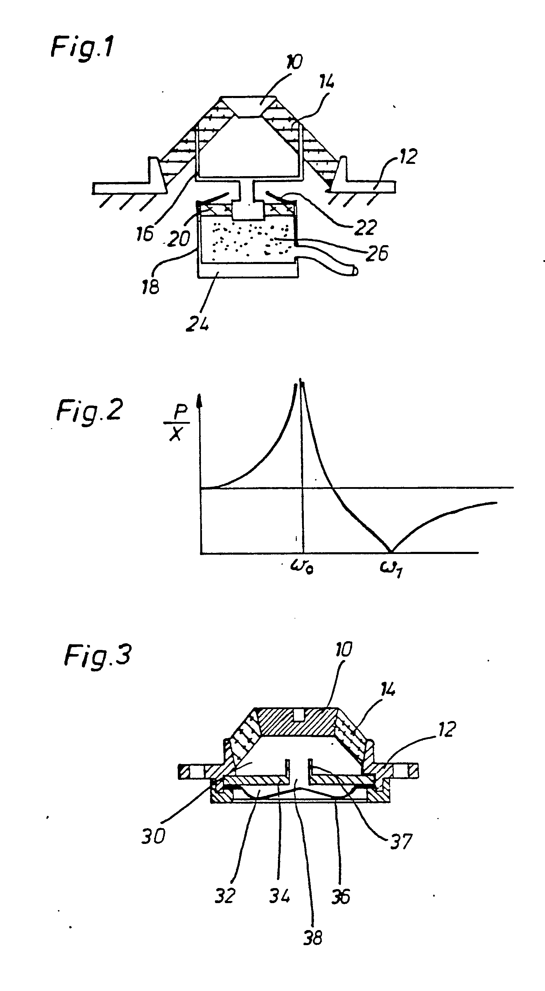

Fig 1 zeigt ein Lager nach dem Stand der Technik, bei dem eine Tilgermasse angekoppelt ist, um eine dynamische Steifigkeit zu erhalten, die geringer als die statische Steifigkeit ist. Das Lager besitzt einen Lagerkern 10 und ein Widerlager 12, Lagerkern 10 und Widerlager 12 sind über ein Gummielement 14 miteinander verbunden. An das Gummielement 14 ist eine Konsole 16 beispielsweise durch Einvulkanisieren angeschlossen, mit der ein Körper 18 verbunden ist. Der Körper 18 ist auf seiner Oberseite von einer Gummimembran 20 begrenzt, die eine Schwingung der Konsole 16 gegenüber dem Körper 18 ausgleicht. Eine zu große Auslenkung der Membran 20 wird durch einen Anschlag 22 begrenzt. Andererseits ist der Körper 18 durch die Tilgermasse 24 begrenzt, so daß durch die Membran 20, durch die Wandung 18 und durch die Tilgermasse 24 ein Volumen 26 eingeschlossen wird, dessen Gasinnendruck einstellbar ist. Durch die Einstellung dieses Gasinnendruckes läßt sich die Ankoppelungssteifigkeit der Tilgermasse beeinflussen.

Das prinzipielle Übertragungsverhalten dieses Lagers ist in Fig. 2 dargestellt, ausgehend von einer statischen Steifigkeit steigt die Härte des Lagers an bis zu einer Frequenz $\omega_0$, um nach dieser Frequenz auf den Tilgungspunkt $\omega_1$ abzufallen. Bei Frequenzen größer $\omega_1$ steigt die Härte des Lagers wieder an, sie nähert sich asymptotisch einem Grenzwert, der jedoch unterhalb der statischen Steifigkeit liegt.

Es ist ohne weiteres ersichtlich, daß das Lager seine günstigsten Übertragungseigenschaften in dem Bereich $\omega_1$ hat, und, wie die DE-PS-2 947 018 beschreibt, ist man bestrebt, in der Kammer 26 den jeweils für die Drehzahl günstigsten Druck einzustellen, um die Frequenz $\omega_1$ in den jeweiligen Drehzahlbereich zu legen.

Doch selbst bei einem weiten Einstellbereich ist es nicht möglich, die Frequenz $\omega_0$ unter allen Umständen zu vermeiden, und die günstigen Eigenschaften des Lagers im Bereich der Frequenz $\omega_1$ werden erkauft durch ungünstige Eigenschaften in dem Frequenzbereich $\omega_0$.

Ein prinzipiell anderes Verhalten wird mit Lagern erreicht, die beispielsweise in dem Aufsatz der ATZ von 1979, Seite 533 ff beschrieben sind. Eine Weiterentwicklung eines derartigen Lagers ist in Fig. 3 dargestellt Fig. 3 zeigt ein Lager, das einen Lagerkern und ein Widerlager 12 besitzt, die in gleicher Weise über ein Gummielement 14 verbunden sind. Das Innere des Lagers wird eingeschlossen durch den Lagerkern 10, das kegelstumpfmantelförmige Gummielement 14 und eine nachgiebige Wand 36. Das Innere ist mit einem Fluid, vorzugsweise einer Flüssigkeit ausgefüllt, wobei eine Wand 34 vorgesehen ist, die das Fluid in zwei Kammern 30 und 32 trennt. Die erste Kammer 30 wird in ihrem Volumen verändert durch Bewegungen des Lagerkerns 10. Die Volumenänderung wird ausgeglichen durch ein Überströmen des Fluids aus der Kammer 30 in die Kammer 32, wozu in der Trennwand 34 eine Öffnung 38 vorgesehen ist. Die Kammer 32, in die das Fluid überströmt, kann aufgrund der Nachgiebigkeit der Wand 36 die Voluminaänderung wiederum ausgleichen. Die Durchströmöffnung 38 in der Trennwand 34 trägt einen zylindermantelförmigen Fortsatz 37, wodurch sich in der Trennwandöffnung 38 der Trennwand 34 eine zylinderförmige Flüssigkeitssäule befindet, deren Höhe durch die Höhe des Fortsatzes 37 und deren Durchmesser durch den Durchmesser der Bohrung 38 gegeben ist. Diese Flüssigkeitssäule in der Öffnung 38 entspricht einer Tilgermasse, da eine Bewegung auf den Lagerkern 10 zu einer Weiterbewegung dieser Flüssigkeitssäule führt, die aber aufgrund der Trägheit der Flüssigkeitssäule mit einer entsprechenden Verzögerung einsetzt.

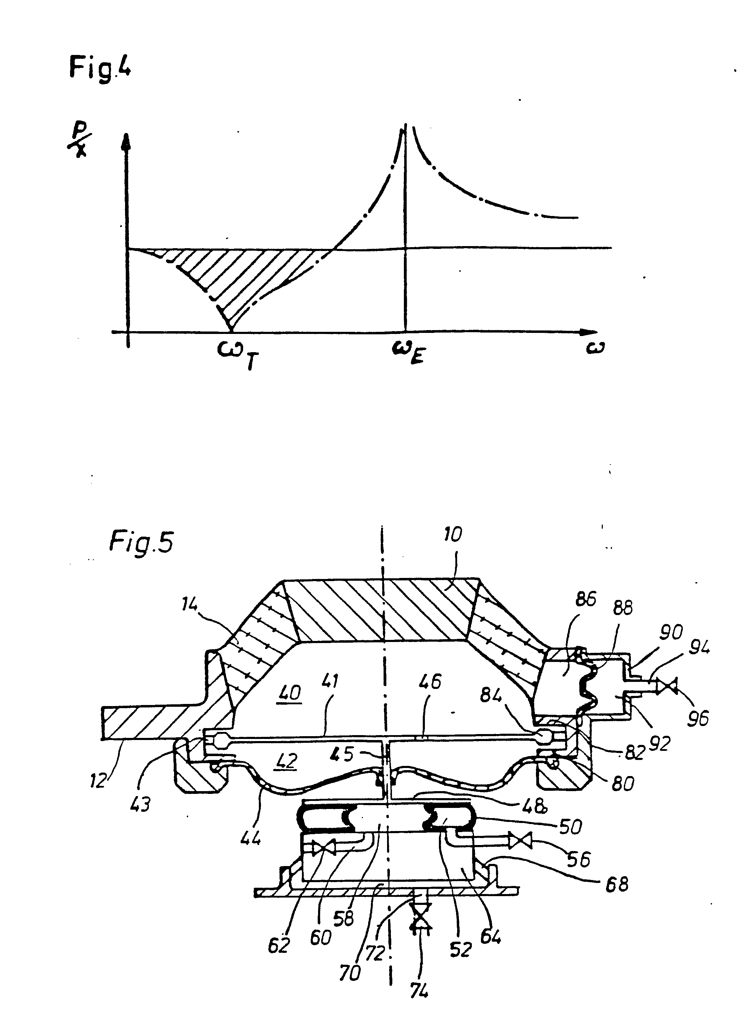

Die Übertragungscharakteristik dieses Systems ist in Fig. 4 dargestellt, wie klar erkennbar ist, ist hier für einen Frequenzbereich $\omega_t$ ein günstiges Übertragungsverhalten erzieltbar. Bei dem Prinzip der gegenschwingenden Masse (Flüssigkeitssäule) wird erreicht, daß, ausgehend von der statischen Steifigkeit, die Übertragungsfunktion zunächst theoretisch bis auf 0 abfällt, sich dann eine Eigenfrequenz ausbildet und die asymptotische Endsteifigkeit für hohe Werte der Frequenz überhalb der statischen Anfangssteifigkeit liegt. Nur für einen Frequenzgang von 0 bis zu einer durch die Lagereigenschaften vorgegebenen Eckfrequenz ergeben sich Werte von niedriger dynamischer Steifigkeit.

Erfindungsgemäß gelingt es, die Vorteile dieser beiden unterschiedlichen Systeme in einem einzigen Lager zu vereinigen, während die jeweils spezifischen Nachteile vermieden werden können.

Ein Beispiel für eine Ausführungsform eines erfindungsgemäßen Lagers, das sich die Vorteile beider Systeme zunutze macht, ist in Fig. 5 gegeben. Bei dem Lager gemäß Fig. 5 ist ein Lagerkern 10 vorgesehen, der beispielsweise mit der Brennkraftmaschine eines Kraftfahrzeuges verbunden ist. Ein Widerlager 12 ist karosserieseitig angeschlossen, und Lagerkern 10 und Widerlager 12 sind über ein Gummielement 14 miteinander verbunden. Lagerkern 10 und Gummielement 14 schließen zusammen mit einer nachgiebigen Wand 44 eine Kammer ein. Diese Kammer wird durch eine Trennwand 41 in zwei Kammern 40 und 42 unterteilt, wobei diese in etwa kreisförmige Trennwand 41 entlang ihres Umfangs am Widerlager 12 über eine nachgiebige Membran 43 befestigt ist. Eine Anregung des Lagerkernes 10 führt somit zum Aufbau eines Über- oder Unterdruckes in der Kammer 40, was durch eine Verschiebung der Trennfläche 41, die sich aufgrund der elastischen Aufhängung 43 verschieben läßt, ausgeglichen werden kann. Da die Trennfläche 41 gleichzeitig Wandung für die Kammer 42 darstellt, wird der Druck in die Kammer 42 übertragen, dort jedoch kann er durch die Nachgiebigkeit der die Kammer 42 begrenzenden Wand 44 ausgeglichen werden.

Eine Drossel 46 in der Trennfläche 41 dient gleichzeitig zum Druckausgleich zwischen den Kammern, der Druckausgleich wird durch Überströmen von Flüssigkeit von der Kammer 40 in die Kammer 42 und umgekehrt bewirkt.

Die Trennfläche 41 ist umfangsmäßig in einem Rezeß im Widerlager 12 gelagert, der Wandungen 80 und 82 besitzt, an die der Umfang 84 der Trennwand 41 bei starker Auslenkung der Trennwand 41 zur Anlage kommt. Ein weiterer Druckausgleich zwischen den Kammern 40 und 42 ist bei Anlage der Trennfläche 41 an der Wandung 80 bzw. 82 nicht mehr möglich, eine Druckänderung bei niedrigen Frequenzen findet durch Überströmen der Flüssigkeit durch die Drossel 46 statt.

Bei höheren Frequenzen jedoch kann ein Überströmen nicht in ausreichendem Maße stattfinden, das Lager wird dann aufgrund seiner vollständig flüssigkeitsgefüllten Kammer 40 und 42 in seinen Eigenschaften hart. Kleine Amplituden werden also durch die Bewegung der Trennwand 41 ausgeglichen, größere Amplituden sind nicht mehr kompensierbar, diese Härte des Lagers bei höheren Frequenzen und größeren Amplituden ist erwünscht.

Erfindungsgemäß ist an die Trennfläche 41 ein Ansatz 45 angesetzt, der durch die Kammer 42 aus dieser herausführt, wobei die Durchstoßstelle des Fortsatzes 45 durch die nachgiebige Wand 44 in entsprechender Weise abgedichtet ist, um den Austritt von Flüssigkeit aus der Kammer 42 zu verhindern. Der Fortsatz 45 trägt an seinem aus der Kammer 42 herausragenden Ende einen Flansch 48, der einen Gummischlauch 50 aus elastomerem Material trägt. Der Flansch 48 ist kreisförmig ausgeführt, der Schlauch 50 etwa entlang des Umfanges angeordnet. Auf der dem Flansch abgewandten Seite des Schlauches 50 ist die Tilgermasse 64 befestigt, so daß durch den Flansch 48, die Tilgermasse 64 und seitlichen den Schlauch 50 ein Volumen 58 eingeschlossen wird. Im Innern des Schlauches selbst befindet sich ein Gasvolumen 52. Das Gasvolumen 52 ist über eine Zuleitung 54 mit einem Ventil 56 verbunden, das von dem Schlauch eingeschlossene Volumen 58 ist über eine Zuleitung 60 mit einem Ventil 62 verbunden.

Gleichzeitig ist die Tilgermasse 64 mit einem karosserieseitig verbundenen Bauteil 66 über eine elastische Membran 68 verbunden. Die die Tilgermasse umfangsmäßig umgebende Membran 68 schließt mit der Tilgermasse 64 und dem karosserieseitigen Bauteil 66 ein Gasvolumen 70 ein, das über eine Zuleitung 72 und ein Ventil 74 befüllbar ist.

Der Kammer 40 ist eine Nebenkammer 86 zugeordnet, die mit einer formweichen Membran 88 abgeschlossen ist. Die der Kammer 86 abgewandte Seite der Membran 88 bildet zusammen mit einer mit dem Widerlager verbundenen Wand 90 die Wandung eines Gasvolumens 92 das über eine Zuleitung 94 und ein Ventil 96 ansteuerbar ist.

Die Funktion des Lagers nach Fig. 5 ist folgende:

In an und für sich bekannter Weise sind die Kammern 40 und 42 mit einem Fluid, beispielsweise einer Flüssigkeit wie Wasser, gefüllt. Bei niedrigen Amplituden werden Bewegungen auf den Lagerkern 10 durch ein Ausweichen der Trennfläche 41 kompensiert, die an der Membran 43 elastisch aufgehängt ist. Bei größeren Amplituden kommt die Trennfläche 41 mit ihrem Umfangsrand 84 an den Seitenwänden 80 oder 82 des im Widerlager 12 ausgebildeten Rezesses zum anliegen, so daß der Ausgleich unterschiedlichen Druckes zwischen den Lagern 40 und 42, hervorgerufen durch die Erregung des Lagerkernes 10, durch Überströmen von Flüssigkeit durch die Drossel 46 zwischen den Kammern 40 und 42 ausgeglichen wird. Insoweit entspricht das Lager dem aus der DE-PS-2 802 896 bekannten Prinzip.

Um sich aber bei einem Lager derartiger Bauart die Vorteile des Tilgerprinzips zu bedienen, ist die Tilgermasse 64 an den über den Fortsatz 45 an die Trennfläche 41 angeschlossenen Flansch 48 angekoppelt. Ist die Zuschaltung der Tilgermasse nicht erwünscht, werden der Schlauch 50 und das vom ringförmigen Schlauch 50 eingeschlossene Volumen 58 mit der Außenluft verbunden, indem die Ventile 56 und 62 geöffnet sind. Zugleich wird das Ventil 74 geöffnet, so daß das Luftpolster 70, das zwischen Tilgermasse 64 und der Konsole 66 angeschlossen ist, ebenfalls nach außen entlüftet ist.

4

Ist nun der Einsatz der Tilgermasse gewünscht, wird das Ventil 56 und/oder das Ventil 62 geschlossen. Durch Schließen der Ventile 56 bzw. 62 werden die Luftpolster nicht mehr nach außen entlüftet, im Falle des Schwingens des Flansches 48 überträgt sich somit diese Schwingung auf die Tilgermasse 64, da diese über die Federkonstanten der eingeschlossenen Luftvolumina 52 und 58 an den Flansch 48 angekoppelt ist. Dabei ist es möglich, den Grad der Starrheit der Ankoppelung, also die Federkonstante dadurch einzustellen, daß entweder nur das Ventil 56 oder nur das Ventil 62 oder aber das Ventil 56 sowie das Ventil 62 geschlossen werden.

Während die dargestellte Ausführungsform der Erfindung vorsieht, daß die Ventile 56 und 62 lediglich zum Öffnen und Schließen dienen, so daß beim Schließen das eingeschlossene Luftpolster unter Atmosphärendruck steht, ist es in einer Weiterbildung der Erfindung selbstverständlich möglich, den Druck in den Luftpolstern 52 und 58 unabhängig vom Atmosphärendruck einzustellen. Durch einen Druck der Volumina 52 und 58, der über Atmosphärendruck liegt, läßt sich eine noch erheblich stärkere Ankoppelung der Tilgermasse an den Flansch 48 erreichen. Die Stärke der Federkonstante, mit der die Tilgermasse 64 an den Flansch 48 angeschlossen ist, läßt sich außerdem über das Luftvolumen 70 einstellen. Ist das Ventil 74, das zur Entlüftung des Luftvolumens 70 dient, geschlossen, ist die Tilgermasse 64 verhältnismäßig starr mit der Konsole 66, die karosserieseitig befestigt ist, verbunden, so daß die von ihr auszuführenden Schwingungen geringer sind. Ist das Ventil 74 hingegen geöffnet, kann die Tilgermasse 64 stärker schwingen.

Wie oben beschrieben, ist das Lager gemäß Fig. 5 bei kleinen Amplituden verhältnismäßig weich, da die Trennwand 41 nachgeben kann. Für größere Amplituden wird das Lager härter, da der Druckausgleich zwischen den Kammern 40 und 42 durch Überströmen von Flüssigkeit durch die Drossel 46 stattfinden muß. Dieses Prinzip kann sich als nachteilig erweisen bei Erregungen des Lagerkerns 10 mit niedriger Frequenz und hoher Amplitude. Derartige Erregungen treten typischerweise auf, wenn der Motor angelassen wird oder in seiner Warmlaufphase unrund läuft, beispielsweise, weil der Motor noch nicht auf allen Zylindern läuft. Diese bei oder unterhalb der Leerlaufdrehzahl auftretenden Stöße wurden zu harten Schlägen führen, da die Trennwand 41 sofort an der Seitenwand 80 bzw. 82 des Rezesses zum Anliegen käme. Um jedoch bei diesen besonderen Betriebsbedingungen das Lager weich zu halten, ist die Seitenkammer 86 vorgesehen, die mit der weichen Membran 88 abgeschlossen ist. Die Kammer 86 ist direkt mit der Kammer 40 verbunden, so daß eine Erhöhung des Druckes in der Kammer 40 zu einer Auslenkung der Membran 88 dient, so daß die Trennwand 41 nicht diesen auftretenden Druck kompensieren muß. Die Membran 88 ist beispielsweise als Rollbalg ausgebildet und verhältnismäßig weich, so daß hier auch Stöße größerer Amplitude ausgeglichen werden können.

Bei höheren Frequenzen jedoch ist die Weichheit dieses Lagers nicht erwünscht, deshalb ist das Ventil 96 vorgesehen, das den Raum 92 hinter der Membran 88 be- und entlüftet. Ist das Ventil 96 geöffnet, kann die Membran 88 ohne weiteres in Richtung des hinter ihr liegenden Volumens 92 ausweichen, da sich hinter der Membran 88 kein Gegendruck aufbaut. Ist das Ventil 96 jedoch geschlossen, würde sich in der Kammer 92 bei Ausweichen der Membran 88 der Druck erhöhen, so daß die Membran 88 insbesondere durch die Tatsache, daß das Luftvolumen 92 sehr viel kleiner ist als das Volumen der Kammer 40, kaum noch nachgibt.

Durch eine gezielte Schaltung der Ventile 56, 62, 74 und 96 ist es möglich, die Lagereigenschaften an den jeweiligen Betriebszustand anzupassen. Da die auftretenden Schwingungen eines Motors im wesentlichen von der Drehzahl abhängen, ist es sinnvoll, diese Ventile abhängig von der jeweiligen Drehzahl zu steuern.

Tabelle 1 gibt ein konkretes Ausführungsbeispiel an, wie die Steuerung der Ventile abhängig von der Drehzahl erfolgen kann.

**Tabelle 1**

| Drehzahl (U/min) | Ventil 56 | Ventil 62 | Ventil 74 | Ventil 96 | vgl. Fig. 6 |
|---|---|---|---|---|---|
| < 1000 | offen | offen | offen | offen | Kurve I |
| 1000 - 3500 | zu | zu | zu | zu | Kurve II |
| 3500 - 4000 | offen | zu | offen | zu | Kurve III |
| > 4000 | zu | zu | offen | zu | Kurve IV |

Wie die Tabelle ausweist, sind bei Drahzahlen im Bereich der Leerlaufdrehzahl alle Ventile offen. Beliebige Axialbewegungen des Lagerkerns 10 werden ohne Druckänderung in der Flüssigkeit von der Membran 88 aufgenommen. Durch die Masseneffekte der Flüssigkeit in der Vorkammer 86 vor der Membran 88 sinkt die dynamische Steifigkeit für das Leerlauffrequenzgebiet ab.

Bei Drehzahl zwischen 1000 und 3500 U/min sind sämtliche Ventile geschlossen, d. h. die Trennfläche 41 ist durch die hohen Federkonstanten der Volumina 52, 58 und 70 durch Federsteifigkeit mit der Konsole 66 verbunden, die starr karosserieseitig befestigt ist. Kleine Amplituden des Lagerkernes 10 werden durch die Membran 88 aufgenommen, wobei Masseneffekte der Flüssigkeit wiederum ein Absinken der dynamischen Steifigkeit bewirken, nun jedoch bei höheren Frequenzen, da die Membran 88 steifer verbunden ist als bei niedrigen Drehzahlen, bei denen das Ventil 96 geöffnet war. Weiterhin wird bei diesen Drehzahlen durch die Drossel 46 Flüssigkeit zwischen den Kammern 40 und 42 ausgetauscht, was zu einer Dämpfung des Lagers führt.

Bei einem Motorbetrieb zwischen 3500 und 4000 U/min ist die Membran 88 verhältnismäßig wirkungslos, da die Flüssigkeitsmasse in der Vorkammer 86 auf niedrigere Frequenzen abgestimmt ist, so daß für den höheren Frequenzbereich keine Flüssigkeitsströmung in der Vorkammer 86 erfolgt. Die Bewegung des Lagerkernes 10 wird somit auf die Trennfläche 41 übertragen. Diese ist über die Elastizität der Luftkammer 58 mit der Tilgermasse 64 verbunden, die Tilgermasse kann, da das Ventil 74 geöffnet ist, frei schwingen. Die Tilgermasse 64 gibt in Verbindung über die elastische Ankoppelung über die Kammer 58 ihre Schwingbewegungen auf den Flansch 48 und über den Fortsatz 45 auf die Trennfläche 41 ab, wodurch Druckschwankungen in der Flüssigkeit, die sich in den Kammern 40 und 42 befindet, übertragen werden. Das Lager bekommt dadurch Tilgungseigenschaften. Für niederfrequente Bewegungen mit größeren Amplituden ergibt sich durch die Progressivität der Luftkammer 92 eine Anlage der Trennfläche 41 an die als Anschläge wirkenden Seitenwände 80 und 82 des Rezesses. Weitere Bewegungen können nur durch Drucksteigerungen in der Flüssigkeit der Kammer 40 bzw. 42 und durch ein Verpumpen durch Drossel 46 erfolgen. Daraus resultiert eine Dämpfung des Lagers für die niederfrequenten Bewegungsanteile mit größerer Amplitude.

Bei Motordrehzahlen von über 4000 U/min ist eine noch steifere Anbindung der Tilgermasse 64 an die Trennfläche 41 erwünscht, was durch Schließen des Ventiles 56 erreicht wird. Die Federkonstante, mit der die Tilgermasse 64 dann an den Flansch 48 angebunden ist, ergibt sich aus der Federkonstanten der Luftvolumina 52 bzw. 58.

Selbstverständlich lassen sich die Eigenschaften des Lagers in einem weiteren Bereich zusätzlich beeinflussen, indem die Ventile nicht vollständig geöffnet und geschlossen werden, sondern durch die Einstellung des Öffnungsgrades gleichzeitig als Drossel verwendet werden. Weiterhin ist es denkbar, daß das Motorlager, anstatt daß die Ventile durch die Drehzahl gesteuert werden, an einen Regelkreis angeschlossen wird, so daß die Schwingungen, die der Motor auf das Fundament überträgt, abgefragt werden und dementsprechend der Öffnungsgrad der Ventile eingestellt wird, um diese Schwingungen zu eliminieren.

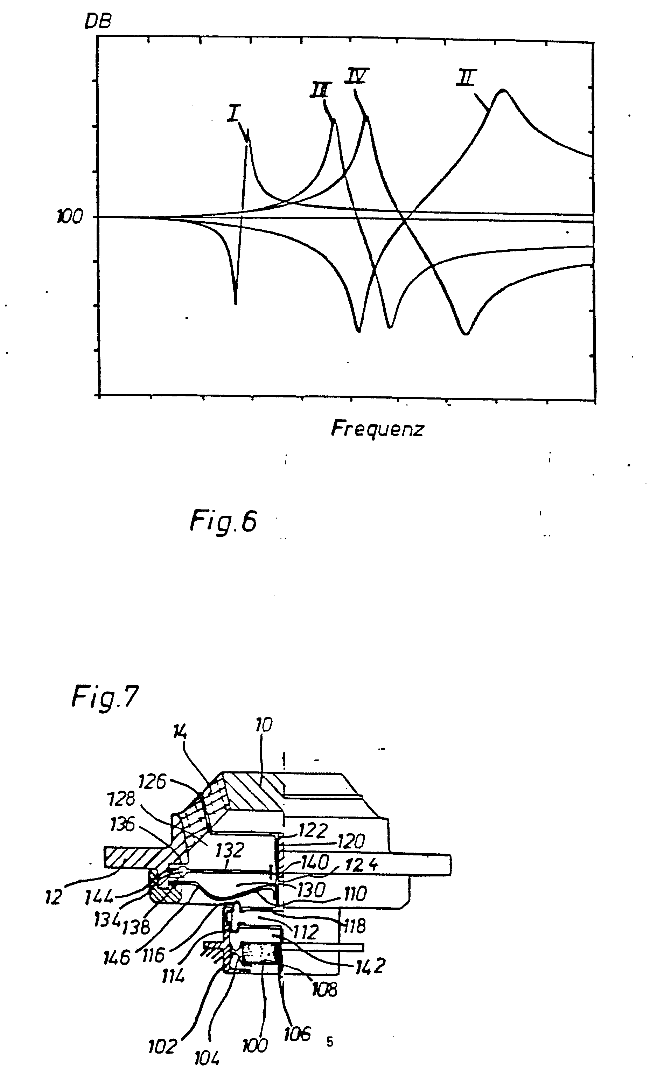

In Fig. 6 ist schematisch die Übertragungsfunktion des Lagers nach Fig. 5 dargestellt. In der y-Achse ist bei 100 die statische Steifigkeit des Lagers als Gerade aufgetragen, die vier verschiedenen Kurven geben die dynamische Steifigkeit, Abhängigkeit von der Frequenz, die auf das Lager einwirkt, an. Die mit I bezeichnete Kurve stellt das Verhalten des Lagers bei offenem Ventil 62 dar, also bei verhältnismäßig loser Anbindung der Tilgermasse 64 an die Trennfläche 41.

Die Kurve II hat im wesentlichen den gleichen Funktionslauf wie die Kurve I, nämlich Absinken bei niederen Frequenzen, dann Ansteigen der Lagereigenschaften oberhalb des Tilgerpunktes bis auf den Resonanzfall, um, sich dann asymptotisch einem Wert zu nähern, der jedoch oberhalb der statischen Steifigkeit liegt. Die Kurve II ist nur gegenüber der Kurve I in den Bereich zu höheren Frequenzen hin verschoben, was durch die stärkere Federkonstante der Anbildung der Tilgermasse 64 bewirkt wird.

In ihrem Verlauf unterschiedlich davon sind die Kurven III und IV, die durch die Federkonstanten der Luftvolumina 70 bzw. 92 bewirkt werden. Hier steigt die Kurve, die die dynamischen Eigenschaften des Lagers repräsentiert, mit steigender Frequenz über einen Wert, der der statischen Steifigkeit entspricht, an, um dann jenseits des Resonanzwertes abzufallen auf Werte, die unterhalb der statischen Steifigkeit liegen. Um die gewünschten Lagereigenschaften zu erhalten, wird man jeweils nur den hinteren Bereich dieser Kurven ausnutzen.

In Fig. 7 ist eine weitere Ausführungsform eines Lagers dargestellt, mit Hilfe dessen die Erfindung verwirklicht wird. Es ist wiederum ein Lagerkern 10 und ein Widerlager 12 vorgesehen, die über ein Gummielement 14 in gleicher Weise wie in Fig. 5 miteinander verbunden sind. An dieses Gummielement 14 ist jedoch ein Zwischenring 126 befestigt, der mit dem Gummielement 14 bewegungsgekoppelt ist und, da er auf halben Wege zwischen Lagerkern 10 und Widerlager 12 angebracht ist, mit etwa der halben Amplitude des Lagerkernes 10 bewegt wird.

Mit dem Zwischenring 126 ist über eine Verbindungsscheibe 122, die große Öffnungen trägt, ein aus den Kammern des Lagers herausführendes Verbindungselement 120 verbunden.

Der übrige Innenaufbau des Lagers weist wie bei der ersten Ausführungsform zwei Kammern 128 und 130 auf, die durch eine Trennfläche 132 voneinander getrennt sind. Im Widerlager 12 läuft im innern des Lagers ein Rezeß mit den Seitenwänden 136 und 138, die als Anschlag für den verstärkten Umfang 134 der Trennfläche 132 dienen. Die Trennfläche 132 ist in bekannter Weise entlang ihres Umfangs 138 an einer Membran 144 befestigt, die wiederum mit dem Widerlager 12 verbindet. Die Membran 144 verläuft innerhalb des Rezesses, der von den Seitenwänden 136 und 138 gebildet wird.

In der Trennfläche ist eine kleine Öffnung 140, die als Drossel dient, dargestellt, diese Öffnung verbindet die Kammer 128 mit der Kammer 130. Beide Kammern sind mit einem Fluid, vorzugsweise mit Wasser oder Silikonöl, gefüllt. Die untere Kammer 130 ist über eine elastische Wand 146 abgedichtet, so daß Bewegungen des Lagerkernes 10 durch die Formweichheit der Wand 146, mit Hilfe derer sich das Volumen der Kammer 130 erweitern läßt, ausgeglichen werden können.

Das Verbindungselement 120 verbindet das Flüssigkeitsvolumen der Kammer 130 über eine Bohrung 124 mit einer außerhalb der Kammern 128 und 130 gelegenen weiteren Flüssigkeitskammer 112. Dazu wird das Verbindungselement 120 durch die weiche Wand 146 geführt, die Durchtrittsstelle ist selbstverständlich am Umfang des Verbindungselementes 120 abgedichtet. Die dritte Kammer 112 ist folgendermaßen begrenzt: Das Verbindungselement 120 trägt an seinem Ende einen Flansch 118, der die eine Wand der Kammer 112 bildet. Dieser Flansch 118 ist über eine elastische Verbindung 116 an einem Fundament 102, das karosserieseitig befestigt ist, angebracht, diese Wand des Fundamentes 102 begrenzt die Kammer 112 seitlich, während der Boden der Kammer 112 durch eine Scheibe 110 gebildet wird, die in etwa dem Flansch 118 in ihren Abmessungen entspricht. Die Scheibe 110 ist ebenfalls durch die elastische Aufhängung 114 mit dem Fundament 102 verbunden. Die Scheibe 110 trägt an ihrem unteren Ende einen stiftförmigen Fortsatz 108. Unterhalb der Scheibe 110 befindet sich die Tilgermasse 100, die ebenfalls elastisch abdichtet mit progressiver Wirkung über ein Gummi 104 an dem Fundament 102 befestigt ist. Die Scheibe 110, Fundament 102 und Tilgermasse 100 schließen ein Gasvolumen 142 ein. Mit der Tilgermasse 100 ist eine Spule 106 für Stromdurchfluß verbunden, vorzugsweise läßt sich die Spule 106 in die Tilgermasse 100 integrieren und trägt zur Massenwirkung der Tilgermasse 100 bei. Der Fortsatz 108 der Scheibe 110 wird aus ferritischem Material gebildet und ragt in die Spule 106 hinein.

Die Wirkungsweise dieses in Fig. 7 dargestellten Lagers ist folgende:

Die in der Kammer 130 befindliche Flüssigkeit ist über die Bohrung 124 im Verbindungselement 120 mit der Kammer 112 verbunden. Bewegungen des Lagerkernes rufen Bewegungen des Zwischenringes 126 hervor, die über das Verbindungselement 120 auf den Flansch 118 übertragen werden, was zu Druckänderungen auch in der Kammer 112 führt. Diese Druckänderungen werden dementsprechend auch auf die Scheibe 110 übertragen, die über das Volumen 142, das beispielsweise mit Luft gefüllt sein kann, an die Tilgermasse 100 angekoppelt ist. Die Federkonstante des Luftvolumens 142 bestimmt den Grad der Ankoppelung der Tilgermasse 100 an die Scheibe 110. Die Masse 100 kann auf Schwingungen der Platte 110 antworten, da sie über ein elastisches Gummielement 104 mit geringer Schubsteifigkeit und hoher Volumensteifigkeit an das Fundament 102 angeschlossen ist. Die Steifigkeit der Ankoppelung der Tilgermasse 100 an die Scheibe 110 läßt sich einstellen, indem die Steifigkeit des Luftvolumens 142 eingestellt wird. Dazu dient der Tauchspulenmagnet 106, mit Hilfe dessen der Grad der Ankoppelung durch Veränderung des Volumens der Kammer 142 eingestellt werden kann. Je mehr Strom durch die Spule 106 fließt, um so stärker wird die Scheibe 110 an die Tilgermasse 100 herangezogen, und um so steifer ist die Ankoppelung der Tilgermasse 100 an die Scheibe 110.

Durch Steuerung des Stromdurchflusses durch die Spule 106 kann die Tilgerfrequenz mit der Drehzahl mitgeführt werden. Ohne Stromdurchfluß durch die Spule 106 und eine eventuelle vollständige Belüftung des Volumens 142 ist die Tilgermasse 100 hingegen vollständig abgekoppelt.

Um die Mitführung der Tilgerfrequenz mit der Drehzahl unabhängiger von Toleranzeigenschaften zu machen, kann die Steuerung der Steifigkeit in der Kammer 142 durch eine Regelung ersetzt werden. Hierzu ist eine Messung der Relativamplitude von Tilgermasse 100 zum Flansch 118 bzw. zum damit gleichzeitig bewegten Zwischenring 126 notwendig. Die Messung dieser Relativamplitude kann jedoch in dem Tauchspulmagneten 106 erfolgen.

Weiterhin ist die Kenntnis der Phasenlage der Bewegung der Tilgermasse 100 notwendig. Dies kann beispielsweise durch eine weitere berührungslose Bewegungsmessung zwischen Tilgermasse 100 und Fundament 102 durchgeführt werden, beispielsweise durch die Messung der Kapazitätsänderung zwischen der Tilgermasse 100 und einer darunterliegenden Begrenzungsplatte. Da diese Messung nur zur Beurteilung der der Phasenlage dient, werden keine besonderen Anforderungen an die Genauigkeit der Messung gestellt. Aus den daraus ermittelten Parametern läßt sich das Volumen in der Kammer 142 durch Verstellung des Magneten 106 so einstellen, daß die Tilgerfrequenz des Lagers jeweils optimal den auftretenden Schwingungen angepaßt ist.

Die übrige Wirkungsweise des Lagers bei kleinen und größeren Amplituden, die Wirkung der Trennfläche 132 und der Drossel 140 sind bereits oben beschrieben.

Bei Bedarf läßt sich zur Drossel 140, was in Fig. 7 nicht dargestellt ist, ein Umgehungsventil vorsehen, mit Hilfe dessen das Lager bei niedrigen Frequenzen oder großen Amplituden weich gehalten wird, da bei größeren Auslenkungen des Lagerkernes 10 die Trennfläche 132 mit ihrem Umfang 134 nicht an den Anschlag 138 zur Anlage kommt, sondern der Druckausgleich zwischen der Kammer 128 und 130 über einen entsprechenden Bypass durchgeführt wird.

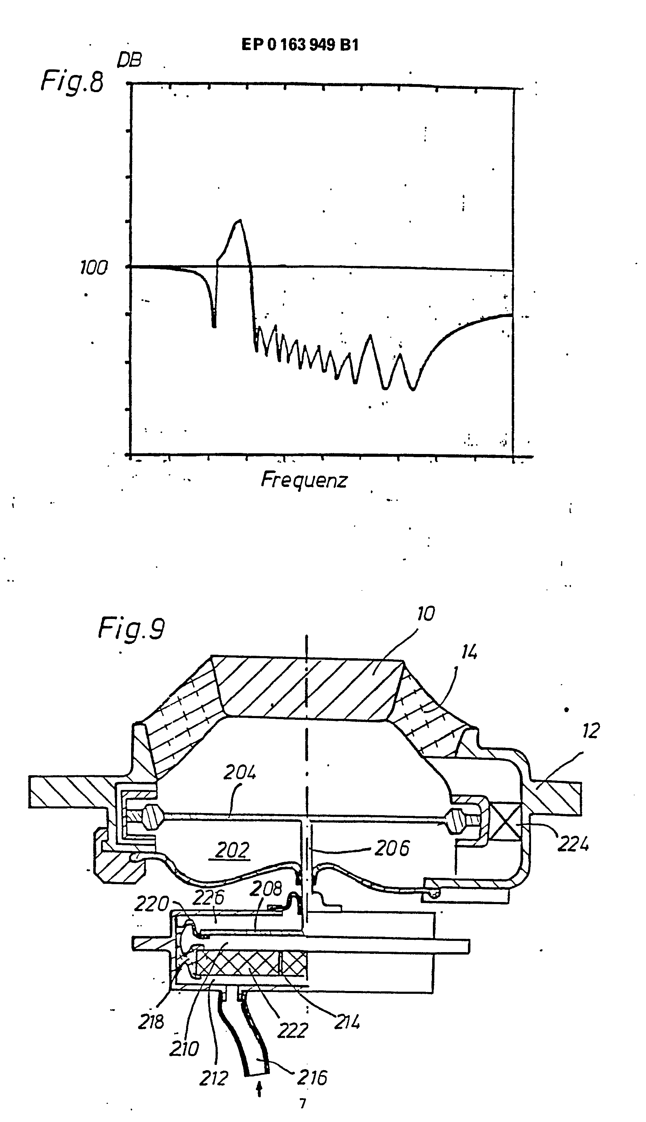

In Fig. 8 ist wiederum die Übertragungsfunktion des Lagers nach Fig. 7 dargestellt. Unterhalb von Frequenzen bis etwa 40 Hz resultieren die dynamischen Eigenschaften des Lagers im wesentlichen durch die Auslenkung der Trennwand 132. Hier ist es günstig, die Tilgermasse 100 überhaupt nicht an das Lager anzukoppeln, indem der Stromdurchfluß durch den Magneten 106 abgeschaltet ist und das Volumen 142 belüftet ist. Bei höheren Frequenzen ist die Tilgerwirkung erwünscht und der Grad der Ankoppelung wird durch die Stärke des Stromflusses 106 eingestellt, die verschiedenen Schaltstufen führen zu den einzelnen, oberhalb einer Frequenz von 60 Hz aufgeführten Spitzen der dynamischen Steifigkeit.

Fig. 9 zeigt eine weiter Ausführungsform eines Lagers, mit Lagerkern 10, Widerlager 12 und Gummielement 14. Das Lager wird durch eine Trennwand 204 im Innern in zwei Kammern 200 und 202 aufgeteilt, wobei die Aufhängungen der Trennfläche 204 bereits in Verbindung mit den vorher aufgeführten Ausführungsformen beschrieben wurde, ebenso wie eine Drossel, die die Kammer 200 mit der Kammer 202 verbindet, die deshalb ebenfalls hier nicht erneut erwähnt wird. Die Trennfläche 204 besitzt einen Fortsatz 206, der in einen Flansch 208 außerhalb der Kammer mündet. Der Flansch 208 bildet die Decke einer weiteren Gaskammer 210, der Boden der Gaskammer wird durch die Tilgermasse 222 gebildet. Der Flansch 208 ist elastisch in Verbindung mit der Trennfläche 204 bewegbar, es ist zu diesem Zweck umfangsseitig eine Abdichtung 220 vorgesehen. Die Tilgermasse 222 ist wiederum mit einem Gummielement geringer Schubsteifigkeit und hoher Volumensteifigkeit angebunden. Eine Durchbohrung 214 durch die Tilgermasse 222 verbindet mit einer rückseitig der Tilgermasse 222 ebenfalls vorgesehenen Kammer 212, so daß die Tilgermasse beidseitig mit einem Gasdruck beaufschlagbar ist. Der Gasdruck kann über eine Zuführung 216 eingestellt werden.

In bereits oben beschriebener Weise ist zwischen den Kammern 200 und 202 ein Bypass 224 vorgesehen, um die Drossel wirkungslos zu schalten.

7

Die Bewegung der Trennfläche 204 wird auf die Decke 208 der Kammer 210 übertragen. Das Luftvolumen 210 bildet die Tilgerfeder, da über die Federkonstante dieses Luftvolumens 210 die Tilgermasse 222 angekoppelt ist.

Über die Luftkammer 212 ist die Tilgermasse 222 gleichzeitig elastisch an das Fundament angekoppelt, eine Erhöhung des Druckes in den Kammern 212 und 210 führt zu einer Erhöhung der Federsteifigkeit, so daß durch die Wahl des Druckes in den miteinander verbundenen Kammern 210 und 212 die Federsteifigkeit und somit die Tilgerfrequenz in Abhängigkeit vom Motorbetriebszustand verändert werden kann.

Wesentlich ist noch, daß der Druck in der Kammer 210, der auf die Decke 208 und somit auf die Trennfläche 204 wirkt, kompensiert wird durch einen Gegendruck auf der Oberseite der Decke 208, damit die Trennfläche 204 nicht aus ihrer Mittelstellung ausgelenkt wird.

Durch Erhöhung des Druckes beiderseits der Decke 208 in Kammer 226 und 210 ist es beispielsweise möglich, die Trennwand 204 weniger weich in ihren Auslenkungen zu machen, wodurch das Lager insgesamt härter wird, eine Eigenschaft, die beispielsweise bei Lastwechselvorgängen erwünscht ist.

Weiterhin kann die wirksame Tilgerfrequenz in weiterem Rahmen beeinflußt werden, wenn die Kammern 210 und 212 nicht über eine Bohrung 214 miteinander verbunden werden, sondern in ihren jeweiligen Drücken individual einstellbar sind, wobei jedoch die dabei auftretende einseitige Vorspannung zu berücksichtigen ist.

## Patentansprüche

1. Lager zur Unterdrückung von mechanischen Schwingungen, insbesondere zur Lagerung der Brennkraftmaschine in einem Kraftfahrzeug, mit
   a)   einem Lagerkern (10),
   b)   einem Widerlager (12),
   c)   einer elastischen Verbindung (14) zwischen Lagerkern und Widerlager (12),
   d)   mindestens zwei, in Verbindung miteinander stehenden fluidgefüllten Kammern (40, 42), wobei die Elastizitätseigenschaften des in die Kammern eingeschlossenen Fluidvolumens die Dämpfung von Relativbewegungen des Lagerkerns (10) zum Widerlager (12) beeinflussen,
   e)   einer Trennfläche (41) zwischen zwei Kammern (40, 42),
   f)   einer Drossel (46) zur Drosselung des Fluidüberganges von einer Kammer (40) in die andere (42),
   g)   einer durch die Bewegung des Lagerkerns (10) bewegbaren Tilgermasse (64),
   gekennzeichnet durch
   h)   eine Vorrichtung zur wahlweisen An- und vollständigen Abkoppelung der Tilgermasse (64) an ein durch die Schwingungen bewegtes Lagerteil.

2. Lager nach Anspruch 1, dadurch gekennzeichnet, daß die Tilgermasse (64) wahlweise an die Trennfläche (41) angekoppelt ist.

3. Lager nach Anspruch 2, dadurch gekennzeichnet, daß die Ankoppelung (56, 62) ein eingeschlossenes Fluidpolster (52, 58) aufweist, das die Trennfläche (41) mit der Tilgermasse (64) verbindet.

4. Lager nach einem der vorhergehenden Ansprüche, dadurch gekennzeichnet daß die Ankoppelung einen Flansch (48) aufweist, der über einen ringförmigen Gummischlauch (50) mit der Tilgermasse (64) verbunden ist.

5. Lager nach Anspruch 4, dadurch gekennzeichnet, daß das von Gummischlauch (50), Flansch (48) und Tilgermasse (64) begrenzte Volumen über ein Ventil (62) mit der Außenluft in Verbindung steht.

6. Lager nach einem der vorhergehenden Ansprüche, dadurch gekennzeichnet, daß ein weiteres durch das Öffnen eines Ventils im Druck veränderbares Fluidvolumen (70) vorgesehen ist, das die Tilgermasse (64) an ein mit dem Widerlager (12) im wesentlichen starr verbundenes Bauteil (66) ankoppelt.

7. Lager nach einem der vorhergehenden Ansprüche, dadurch gekennzeichnet, daß mindestens eines der Ventile (56, 52, 74) durch Fahrzeugparameter steuerbar ist.

8. Lager nach einem der vorhergehenden Ansprüche, dadurch gekennzichnet, daß eine Ausgleichseinrichtung (88) vorgesehen ist, die bei größeren Bewegungsamplituden des Lagerkerns (10) mindestens in einer Kammer (40) den internen Druck ausgleicht, so daß die Übertragung der Bewegung des Lagerkerns (10) auf die Tilgermasse (64) verringerbar ist.

9. Lager nach Anspruch 8, dadurch gekennzeichnet, daß die Ausgleichsvorrichtung einen beeinflußbaren Bypass zur Drossel aufweist.

10. Lager nach Anspruch 8, dadurch gekennzeichnet, daß die Ausgleichsvorrichtung eine mindestens der Kammer (40), auf die die Bewegung des Lagerkerns (10) wirkt, zugeordnete formweiche Ausgleichsmembran (88) aufweist, durch deren Nachgiebigkeit das Volumen der zugehörigen Kammer erweiterbar ist.

11. Lager nach Anspruch 9, dadurch gekennzeichnet, daß der Bypass in seinem Öffnungsgrad abhängig von den Motorparametern eingestellt wird.

12. Lager nach Anspruch 10, dadurch gekennzeichnet, daß der Druck, gegen den die formweiche Ausgleichsmembran (88) arbeitet, einstellbar ist.

13. Lager nach Anspruch 10 oder 12, dadurch gekennzeichnet, daß das Druckvolumen (92) gegen das die formweiche Ausgleichsmembran (88) arbeitet, ein Ventil (96) besitzt, das das Volumen (92) mit der Außenluft verbindet.

14. Lager nach Anspruch 13, dadurch gekennzeichnet, daß das Ventil (96) abhängig von Motorparametern einstellbar ist.

8

15. Lager nach einem der vorhergehenden Ansprüche, <u>dadurch gekennzeichnet</u>, daß die Tilgermasse (100) mit einer Wandung (110) verbunden ist, die durch eine Bewegung des Lagerkerns (10) zwangsbewegt wird.

16. Lager nach einem der vorhergehenden Ansprüche, <u>dadurch gekennzeichnet</u> daß die dem Lagerkern (10) zugeordnete Kammer (130) an eine dritte Kammer (112) über eine Fluidverbindung (120) angeschlossen ist, wobei die Tilgermasse (100) an eine elastisch bewegbare Wand (110) der dritten Kammer (112) angekoppelt ist.

17. Lager nach Anspruch 16, <u>dadurch gekennzeichnet</u>, daß die Tilgermasse (100) über ein Fluidvolumen (142), dessen Parameter über einen Elekromagneten (106) veränderbar sind, an die bewegbare Wand (110) angekoppelt ist.

18. Lager nach Anspruch 17, <u>dadurch gekennzeichnet</u>, daß die Tilgermasse (100) an einem mit dem Widerlager (12) im wesentlichen starr verbundenen Bauteil (102) elastisch (104) aufgehängt ist, wobei durch die Stärke der Ankoppelung an die bewegbare Wand (110) über das Fluid (142), dessen Volumen und Steifigkeit durch Verschiebung der Elektromagneten (106) verändert werden kann, beeinflußbar ist.

19. Lager nach Anspruch 1 oder 2, <u>dadurch gekennzeichnet</u>, daß mit der Trennfläche (204) ein Flansch (208) zwangsbewegt wird, der eine Wandung für ein Gasvolumen (210) bildet, das als weitere Wandung die elastisch (218) aufgehängte Tilgermasse (222) aufweist.

20. Lager nach Anspruch 19, <u>dadurch gekennzeichnet</u>, daß die Tilgermasse (222) auf zwei gegenüberliegenden Seiten mit einem Gasvolumen (210, 212) beaufschlagt ist, von denen mindestens eines (212) in seinem Gasdruck einstellbar ist.

21. Lager nach Anspruch 20, <u>dadurch gekennzeichnet</u>, daß die beiden Gasvolumina (210, 212) miteinander verbunden (214) sind.

22. Lager nach Anspruch 19 und 20, <u>dadurch gekennzeichnet</u>, daß der die Wandung bildende Flansch (208) beidseitig mit dem gleichen Druck beaufschlagt wird.

## Claims

1. Bearing for the suppression of mechanical vibrations, particularly for the mounting of the internal-combustion engine in a motor vehicle, having

a) a bearing core (10),
b) an abutment (12),
c) an elastic connecting means (14) between bearing core and abutment (12),
d) at least two mutually communicating fluid-filled chambers (40, 42), the elasticity characteristics of the fluid volume enclosed in the chambers controlling the damping of movements of the bearing core (10) relative to the abutment (12),
e) a separating surface (41) between two chambers (40, 42),
f) a throttle (46) for throttling the transfer of fluid from one chamber (40) into the other (42),
g) an extinguishing mass (64) movable by the movement of the bearing core (10),
characterized by
h) a device for the selective coupling and total decoupling of the extinguishing mass (64) to a bearing part moved by the vibrations.

2. Bearing according to Claim 1, characterized in that the extinguishing mass (64) is coupled selectively to the separating surface (41).

3. Bearing according to Claim 2, characterized in that the coupling means (56, 62) exhibits an enclosed fluid cushion (52, 58) which connects the separating surface (41) to the extinguishing mass (64).

4. Bearing according to one of the preceding Claims, characterized in that the coupling means exhibits a flange (48) which is connected to the extinguishing mass (64) by an annular rubber hose (50).

5. Bearing according to Claim 4, characterized in that the volume delimited by rubber hose (50), flange (48) and extinguishing mass (64) communicates with the atmosphere through a valve (62).

6. Searing according to one of the preceding Claims, characterized in that a further fluid volume (70) variable in pressure by the opening of a valve is provided, which couples the extinguishing mass (64) to a component (66) connected substantially rigidly to the abutment (12).

7. Bearing according to one of the preceding Claims, characterized in that at least one of the valves (56, 52, 74) is controllable by vehicle parameters.

8. Bearing according to one of the preceding Claims, characterized in that a compensating device (88) is provided which compensates the internal pressure at least in one chamber (40) in the case of relatively high movement amplitudes of the bearing core (10) so that the transmission of the movement of the bearing core (10) to the extinguishing mass (64) is reducible.

9. Bearing according to claim 8, characterized in that the compensating device exhibits a controllable bypass to the throttle.

10. Bearing according to Claim 8, characterized in that the compensating device exhibits a yielding compensating diaphragm (88) associated at least with the chamber (40) upon which the movement of the bearing core (10) acts, by the yielding of which the volume of the associated chamber is extensible.

11. Bearing according to Claim 9, characterized in that the degree of aperture of the bypass is adjusted as a function of the engine parameters.

9

12. Searing according to Claim 10, characterized in that the pressure, against which the yielding compensating diaphragm (88) acts, is adjustable.

13. Bearing according to Claim 10 or 12, characterized in that the pressure volume (92) against which the yielding compensating diaphragm (88) acts has a valve (96) which connects the volume (92) to the atmosphere.

14. Bearing according to Claim 13, characterized in that the valve (96) is adjustable as a function of engine parameters.

15. Bearing according to one of the preceding Claims, characterized in that the extinguishing mass (100) is connected to a wall (110) which is moved positively by a movement of the bearing core (10).

16. Bearing according to one of the preceding Claims, characterized in that the chamber (130) associated with the bearing core (10) is connected to a third chamber (112) through a fluid connecting means (120), the extinguishing mass (100) being coupled to an elastically movable wall (110) of the third chamber (112).

17. Bearing according to Claim 16, characterized in that the extinguishing mass (100) is coupled to the movable wall (110) through a fluid volume (142), the parameters of which are variable by a solenoid (106).

18. Bearing according to Claim 17, characterized in that the extinguishing mass (100) is suspended elastically (104) from a component (102) connected substantially rigidly to the abutment (12), the intensity of the coupling to the movable wall (110) being controllable by means of the fluid (142), the volume and rigidity of which can be modified by displacing the solenoids (106).

19. Bearing according to Claim 1 or 2, characterized in that a flange (208) which is moved positively by the separating surface (204) forms a wall for a gas volume (210) which exhibits the elastically (218) suspended extinguishing mass (222) as a further wall.

20. Bearing according to Claim 19, characterized in that the extinguishing mass (222) is stressed on two opposite sides by a gas volume (210, 212), the gas pressure of at least one (212) of which is adjustable.

21. Bearing according to Claim 20, characterized in that the two gas volumes (210, 212) are connected to each other (214).

22. Bearing according to Claims 19 and 20, characterized in that the flange (208) which forms the wall is stressed by the same pressure on both sides.

## Revendications

1. Support pour l'élimination d'oscillations mécaniques, en particulier pour le montage du moteur à combustion interne dans un véhicule automobile, comprenant
   a)       un noyau de support (10),
   b)       un appui (12),
   c)       une jonction élastique (14) entre le noyau de support (10) et l'appui (12),
   d)       au moins deux chambres remplies de fluide (40, 42) en communication mutuelle, les caractéristiques d'élasticité du volume de fluide enfermé dans les chambres exerçant une influence sur l'amortissement de mouvements relatifs du noyau de support (10) par rapport à l'appui (12),
   e)       une surface de séparation (41) entre les deux chambres (40, 42),
   f)       un étranglement (46) pour freiner le transfert de fluide d'une chambre (40) dans l'autre (42),
   g)       une masse d'amortissement (64) mobile sous l'effet du mouvement du noyau de support (10),
caractérisé par
   h)       un dispositif pour l'accouplement et le désaccouplement complet sélectifs de la masse d'amortissement (64) à une partie du support qui est mise en mouvement par les oscillations.

2. Support selon la revendication 1, caractérisé en ce que la masse d'amortissement (64) est accouplée sélectivement à la surface de séparation (41).

3. Support selon la revendication 2, caractérisé en ce que l'accouplement (56, 62) présente un coussin de fluide enfermé (52, 58) qui relie la surface de séparation (41) à la masse d'amortissement (64).

4. Support selon l'une quelconque des revendications 1 à 3, caractérisé en ce que l'accouplement présente une bride (48) qui est raccordée à la masse d'amortissement (64) par l'intermédiaire d'un tube flexible en caoutchouc de forme annulaire (50).

5. Support selon la revendication 4, caractérisé en ce que le volume délimité par le tube flexible en caoutchouc (50), par la bride (48) et par la masse d'amortissement (64) est en communication avec l'air extérieur par l'intermédiaire d'une valve (62).

6. Support selon l'une quelconque des revendications 1 à 5, caractérisé en ce qu'il est prévu un autre volume de fluide (70) dont la pression peut être modifiée par l'ouverture d'une valve et qui accouple la masse d'amortissement (64) à un élément de construction (66) raccordé de façon essentiellement rigide à l'appui (12).

7. Support selon l'une quelconque des revendications 1 à 6, caractérisé en ce que l'une au moins des valves (56, 52, 74) peut être commandée par des paramètres du véhicule.

8. Support selon l'une quelconque des revendications 1 à 7, caractérisé en ce qu'il est prévu un dispositif de compensation (88) qui, en cas de grandes amplitudes de mouvement du noyau de support (10), compense la pression interne dans une chambre (40) au moins, de telle façon que la transmission du mouvement du noyau de support (10) à la masse d'amortissement (64) puisse être réduite.

9. Support selon la revendication 8, caractérisé en ce que le dispositif de compensation présente une dérivation influençable pour annuler l'effet de l'étranglement.

10. Support selon la revendication 8, caractérisé en ce que le dispositif de compensation présente une membrane souple de compensation (88) qui est adjointe au moins à la chambre (40) sur laquelle agit le mouvement du noyau de support (10), le volume de la chambre associée pouvant être agrandi par la déformation élastique de cette membrane.

11. Support selon la revendication 9, caractérisé en ce que le degré d'ouverture de la dérivation est réglé sous la dépendance de paramètres du moteur.

12. Support selon la revendication 10, caractérisé en ce que la pression contre laquelle travaille la membrane souple de compensation (88) est réglable.

13. Support selon la revendication 10 ou 12, caractérisé en ce que le volume sous pression (92) contre lequel travaille la membrane souple de compensation (88) comporte une valve (96) qui met ce volume (92) en communication avec l'air extérieur.

14. Support selon la revendication 13, caractérisé en ce que la valve (96) est réglable sous la dépendance de paramètres du moteur.

15. Support selon l'une quelconque des revendications 1 à 14, caractérisé en ce que la masse d'amortissement (100) est raccordée à une paroi (110) qui est mise en mouvement forcé par un mouvement du noyau de support (10).

16. Support selon l'une quelconque des revendications 1 à 15, caractérisé en ce que la chambre (130) associée au noyau de support (10) est reliée à une troisième chambre (112) par une communication de fluide (120), la masse d'amortissement (100) étant accouplée à une paroi élastiquement mobile (110) de la troisième chambre (112).

17. Support selon la revendication 16, caractérisé en ce que la masse d'amortissement (100) est accouplée à la paroi mobile (110) par l'intermédiaire d'un volume de fluide (142) dont les paramètres peuvent être modifiés au moyen d'un électroaimant (106).

18. Support selon la revendication 17, caractérisé en ce que la masse d'amortissement (100) est suspendue élastiquement (104) à un élément de construction (102) raccordé de façon essentiellement rigide à l'appui (12), la force de l'accouplement à la paroi mobile (110) étant influençable au moyen du fluide (142), dont le volume et la rigidité peuvent être modifiés par déplacement de l'électroaimant (106).

19. Support selon la revendication 1 ou 2, caractérisé en ce qu'une bride (208), qui constitue une paroi pour un volume de gaz (210) qui présente, comme autre paroi, la masse d'amortissement (222) suspendue élastiquement (218), est mise en mouvement forcé avec la surface de séparation (204).

20. Support selon la revendication 19, caractérisé en ce que la masse d'amortissement (222) est attaquée sur deux côtés opposés par des volumes de gaz (210, 212) dont l'un au moins (212) est réglable en ce qui concerne la pression du gaz.

21. Support selon la revendication 20, caractérisé en ce que les deux volumes de gaz (210, 212) sont en communication l'un avec l'autre (en 214).

22. Support selon la revendication 19 ou 20, caractérisé en ce que la bride (208) qui constitue la paroi est attaquée des deux côtés avec la même pression.

**Fig.1**

**Fig.2**

**Fig.3**

## Fig.4

## Fig.5

DB

100

Frequenz

Fig.6

Fig.7

**Fig.8**

DB

100

Frequenz

**Fig.9**